# FASCICULE DE BREVET EUROPEEN

(11) **EP 0 923 790 B1**
(45) Date de publication et mention de la délivrance du brevet: **14.11.2001**
(21) Numéro de dépôt: 97938970.7
(22) Date de dépôt: 02.09.1997
(51) Int. Cl.: H01J 29/98, H01J 31/50

(54) **ALIMENTATION RAPIDE POUR TUBE INTENSIFICATEUR D'IMAGE**
SCHNELLE VERSORGUNG FÜR BILDVERSTÄRKERRÖHRE
FAST POWER SUPPLY FOR IMAGE INTENSIFYING TUBE

(30) Priorité: 03.09.1996 FR 9610719
(43) Date de publication de la demande: 23.06.1999
(73) Titulaire: THALES AVIONICS S.A., 78141 Vélizy Villacoublay Cédex (FR)
(72) Inventeur: SONTAG, Yves,Thomson-CSF S.C.P.I., F-94117 Arcueil Cédex (FR); FAUVEL, Eric,Thomson-CSF S.C.P.I., F-94117 Arcueil Cédex (FR)
(74) Mandataire: Albert, Claude
(86) Numéro de dépôt international: FR9701546
(87) Numéro de publication internationale: WO9810462

(56) Documents cités:
- EP-A- 0 033 574
- EP-A- 0 156 436
- EP-A- 0 447 238
- GB-A- 1 457 883
- US-A- 3 816 744
- US-A- 3 872 302

## Description

La présente invention concerne une alimentation rapide pour un tube intensificateur d'image comme ceux utilisés dans des dispositifs de vision nocturne.

Dans un système d'aide à la vision nocturne, un tube intensificateur d'image permet de fournir une image du monde extérieur proche de celle obtenue en condition diurne. Un tel système peut consister en des lunettes ou jumelles de vision nocturne, placées devant les yeux de l'observateur et conçues pour qu'une image intensifiée du monde extérieur se forme sur la rétine.

Ces lunettes ou jumelles peuvent être indépendantes ou bien, par exemple, intégrées dans un casque de pilote d'aéronef.

Un système d'aide à la vision nocturne peut aussi comprendre un tube intensificateur de lumière associé à une caméra CCD et un dispositif de visualisation.

De façon connue un tube intensificateur d'image comprend en général une photocathode placée derrière une fenêtre d'entrée du tube, une galette de microcanaux et un écran de sortie. Et son fonctionnement est le suivant :
- les photons correspondants à l'éclairage ambiant traversent la fenêtre d'entrée du tube et pénètrent dans la photocathode, ils conduisent à l'émission par celle-ci d'électrons qui sont accélérés entre la photocathode et l'entrée de la galette,
- les électrons sont encore accélérés et multipliés dans les canaux de la galette par un phénomène de chocs multiples contre les parois des canaux,
- à la sortie de la galette, les électrons sont de nouveau accélérés par le potentiel fortement positif de l'écran de sortie et viennent frapper la couche photoémissive de celui-ci, ce qui conduit à l'émission de photons et à la restitution d'une image visible en sortie.

Ainsi une luminosité ambiante trop faible pour autoriser une visibilité à l'oeil nu peut suffire pour obtenir une image visible en sortie du tube intensificateur d'image.

Les accélérations et la multiplication des électrons dans le tube sont dues à l'application de tensions adéquates sur différents éléments du tube intensificateur d'image tels que la photocathode, la galette de microcanaux et l'écran de sortie. Ces tensions sont fournies par l'alimentation électrique du tube.

Une alimentation avantageuse doit respecter des contraintes diverses et difficiles à concilier.

Tout d'abord, lorsque la luminosité ambiante est très faible, l'alimentation doit permettre une intensification de lumière suffisante pour présenter une image visible à l'opérateur utilisant le système d'aide à la vision nocturne.

De plus, lorsque la luminosité ambiante est trop forte, l'alimentation doit permettre une protection du tube pour éviter par exemple l'endommagement de l'écran de sortie ou de la galette de microcanaux par des électrons trop nombreux ou trop énergiques. Dans ce cas, l'alimentation peut couper complètement l'intensification de lumière ou réduire très fortement le gain du tube.

Et dans la plage des valeurs de luminosité ambiante intermédiaire, l'alimentation doit permettre un contrôle du gain du tube pour réaliser une intensification de la lumière reçue en entrée du tube, tout en évitant de présenter une image trop brillante à l'opérateur en sortie du tube.

Une alimentation avantageuse assure automatiquement, sur l'écran en sortie de tube intensificateur, une image d'éclairement moyen à peu près constant quelle que soit la valeur de la luminosité ambiante au-dessus d'un seuil minimal. Elle doit autant que possible réagir assez rapidement pour éviter l'éblouissement en cas d'augmentation brusque de luminosité extérieure, et pour éviter les "trous noirs" en cas de baisse brutale de luminosité. L'oeil humain est très sensible à une luminosité trop forte, même pendant une durée très brève (de l'ordre de quelques centaines de microsecondes); d'autre part il réagit lentement pour s'adapter à une diminution brutale de luminosité.

Avec les dispositifs actuels et lors de certaines conditions d'emploi, le temps de réaction du dispositif face à des variations brutales de luminosité est trop élevé, d'une part dans le cas d'une augmentation mais d'autre part surtout dans le cas d'une diminution. Ces différentes exigences impliquent des contraintes sévères sur les alimentations en tension des éléments de l'intensificateur d'image.

D'autre part, une contrainte supplémentaire vient du fait qu'un système d'aide à la vision nocturne peut être utilisé, par exemple, par un pilote de véhicule aérien ou terrestre mais aussi par un fantassin. Ainsi, pour une utilisation peu contraignante pour l'utilisateur, un système d'aide à la vision nocturne est généralement portable et doit pouvoir être alimenté à partir d'une pile; de ce fait le rendement énergétique de l'alimentation doit être nécessairement élevé. De plus, la place disponible étant très limitée, les solutions volumineuses sont à écarter.

La difficulté consiste donc à réaliser une alimentation respectant les diverses contraintes indiquées ci-dessus.

L'objectif de l'invention est de résoudre cette difficulté par une alimentation présentant un dispositif de régulation haute tension pour tube intensificateur de lumière, réglant le gain du tube par variation de la tension de la galette à l'aide d'un amplificateur haute tension dont l'architecture permet l'obtention d'une grande rapidité de réaction avec une consommation faible.

On propose à cet effet un tube intensificateur d'image comprenant une photocathode, une galette d'amplification à microcanaux, un écran de sortie et un circuit d'alimentation produisant une première tension de référence appliquée à une première borne de la galette, une deuxième tension variable appliquée à une deuxième borne de la galette, une troisième tension variable appliquée à la photocathode, et une quatrième tension appliquée à l'écran de sortie, le circuit d'alimentation comprenant un moyen de mesure du courant consommé par l'écran de sortie et un circuit de commande de la deuxième tension variable appliquée à la galette, ce circuit de commande produisant une tension fixe tant que le courant de l'écran ne dépasse pas un seuil et, au delà de ce seuil, une tension variable asservie aux évolutions du courant de l'écran de sortie dans un sens tendant à maintenir ce courant sensiblement constant, le circuit d'alimentation comprenant en outre des moyens pour maintenir sensiblement constante, au delà dudit seuil, la différence entre la troisième tension variable appliquée à la photocathode et la deuxième tension variable appliquée à la galette. Le circuit. Le tube comprend encore un amplificateur haute tension à transistors. Il est caractérisé en ce que l'amplificateur comporte deux ensembles de transistors en série, les ensembles étant reliés chacun d'une part à la galette et d'autre part à une source d'alimentation respective, et en ce que le tube comporte un circuit d'asservissement commandant la conduction d'au moins un des transistors d'un des deux ensembles. L'ampificateur à haute tension à transistors est de préférence du type présentant une faible consommation au repos et une grande rapidité de commande de variation de la deuxième tension en fonction des variations du courant d'écran, aussi bien pour augmenter cette tension que pour la diminuer.

De préférence, les transistors des deux ensembles en série sont polarisés de manière à être faiblement conducteurs en l'absence de variation de la tension de galette, c'est-à-dire de la deuxième tension variable appliquée à la galette; et ils sont également polarisés de manière que d'une part les transistors de l'un des ensembles fournissent du courant à la galette sous la commande du moyen de contrôle pour faire varier la tension de galette dans un sens et d'autre part les transistors de l'autre ensemble prélèvent du courant de la galette sous la commande du moyen de contrôle pour faire varier la tension de galette dans l'autre sens.

Les transistors sont de préférence des transistors MOS à canal P dans les deux ensembles.

L'invention sera mieux comprise à l'aide de la description suivante faite en référence aux figures annexées.

La figure 1 représente un tube intensificateur de lumière avec son alimentation selon l'invention.

La figure 2 représente les tensions aux bornes de deux électrodes d'un tube intensificateur d'image en fonction de la luminosité ambiante.

La figure 3 représente l'amplificateur haute tension et son circuit de régulation.

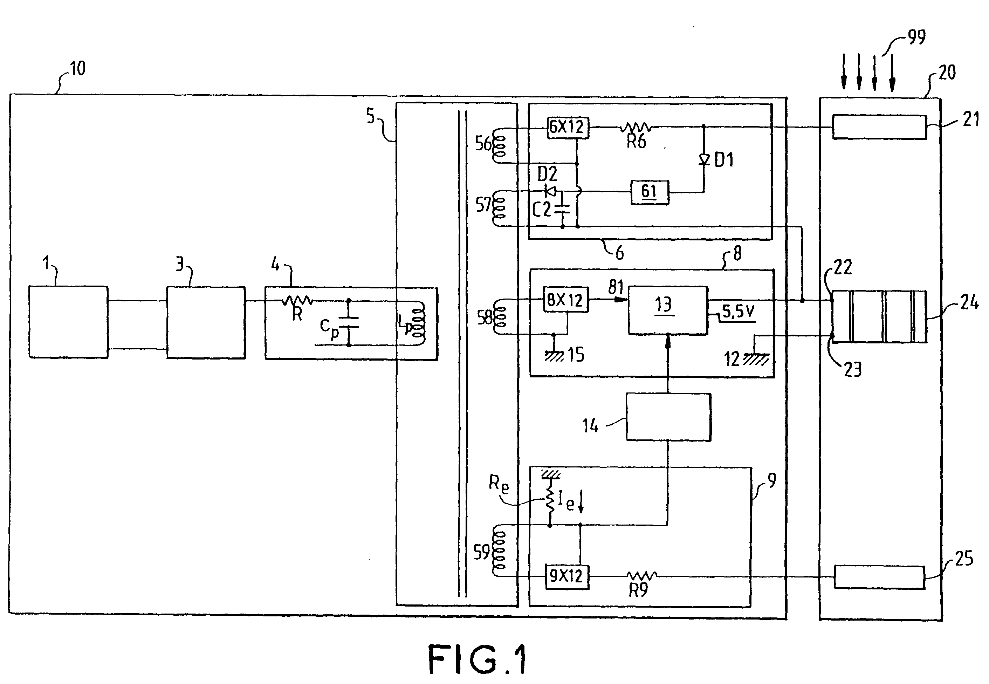

Un schéma de l'alimentation haute tension 10 alimentant un tube intensificateur d'image 20 est représenté sur la figure 1.

L'alimentation 10 comprend de préférence, comme source d'énergie, une pile 1 reliée à un élévateur de tension 3, lui-même relié à un convertisseur 4 alimentant un transformateur multisorties 5.

La pile 1 fournit une tension continue dans une plage de 1,5 Volts à 5 Volts par exemple et cette tension est appliquée à l'entrée d'un élévateur de tension 3. L'élévateur de tension 3 permet d'assurer une tension continue dont la valeur est plus stable que celle obtenue directement aux bornes de la pile, laquelle est sujette à des variations au cours de sa durée de vie.

La valeur de la tension en sortie de l'élévateur 3 est par exemple de 5,5 Volts.

L'élévateur 3 est connecté à un convertisseur 4 à commutations douces comme par exemple un auto-oscillateur de Royer.

L'auto-oscillateur comprend une résistance R, une capacité Cp et un enroulement primaire d'inductance Lp.

Le transformateur multisorties 5 délivre des tensions alternatives de valeurs fixes à des blocs d'alimentation 6, 8 et 9. Ces blocs fournissent des tensions continues aux diverses électrodes du tube intensificateur de lumière 20, et notamment à la photocathode 21, à l'entrée 22 de la galette 24 de micro canaux , à la sortie 23 de ladite galette 24, et à l'écran 25 de sortie du tube 20.

Les valeurs de ces tensions et leurs évolutions permettent d'obtenir le fonctionnement souhaité quel que soit le niveau de luminosité ambiante.

Les tensions appliquées par les blocs d'alimentation aux électrodes sont référencées soit par rapport à une référence de potentiel fixe soit par rapport à une autre électrode. Ainsi, le bloc 8 fournit une première tension fixe (référence de masse 12 ou potentiel fixe par rapport à une masse 12) sur la sortie 23 de la galette 24 et une deuxième tension variable sur l'entrée 22 de la galette. Le bloc 6 fournit une troisième tension variable sur la photocathode mais cette tension est référencée par rapport à la deuxième tension variable. Et le bloc 9 fournit une quatrième tension (en principe fixe) sur l'écran de sortie 25, référencée par rapport à un potentiel fixe qui peut être la masse 12. Les tensions variables permettent, comme on le verra, la régulation de gain du tube pour obtenir un éclairement désiré sur l'écran de sortie en fonction des conditions de luminosité de la scène observée.

La fonction du bloc d'alimentation 6 est de délivrer une tension entre la photocathode 21 et l'entrée 22 de la galette de microcanaux 24 pour permettre l'extraction et l'accélération d'électrons de la photocathode lors de la réception de photons 99 en provenance d'une scène observée. Les électrons émis sont reçus en entrée de galette.

La fonction du bloc d'alimentation 8 est de délivrer une tension entre l'entrée 22 de la galette 24 et la sortie 23 de ladite galette. Les électrons reçus en entrée de galette sont accélérés et multipliés jusqu'à la sortie de la galette par la différence de potentiel entre les deux bornes 22 et 23 de ladite galette. Lorsqu'on parlera de "tension de galette" dans la suite, on considérera qu'il s'agit de la valeur absolue de la tension appliquée entre l'entrée et la sortie de la galette. Le potentiel d'entrée de galette et le potentiel de photocathode sont négatifs par rapport à la référence de tension (de préférence fixe) que constitue la sortie de galette.

Le bloc d'alimentation 9 délivre une haute tension positive appliquée à l'écran 25 de sortie du tube, permettant une accélération des électrons sortant de la galette et allant frapper l'écran.

En frappant l'écran 25, les électrons conduisent à la circulation d'un courant d'écran Iₑ dans le bloc 9. Ce courant représente le courant moyen consommé par l'écran de sortie, et il est d'autant plus élevé que l'image de sortie est plus lumineuse.

Le courant d'écran Iₑ est mesuré par une résistance interposée en série entre la masse et les autres éléments du bloc d'alimentation 9.

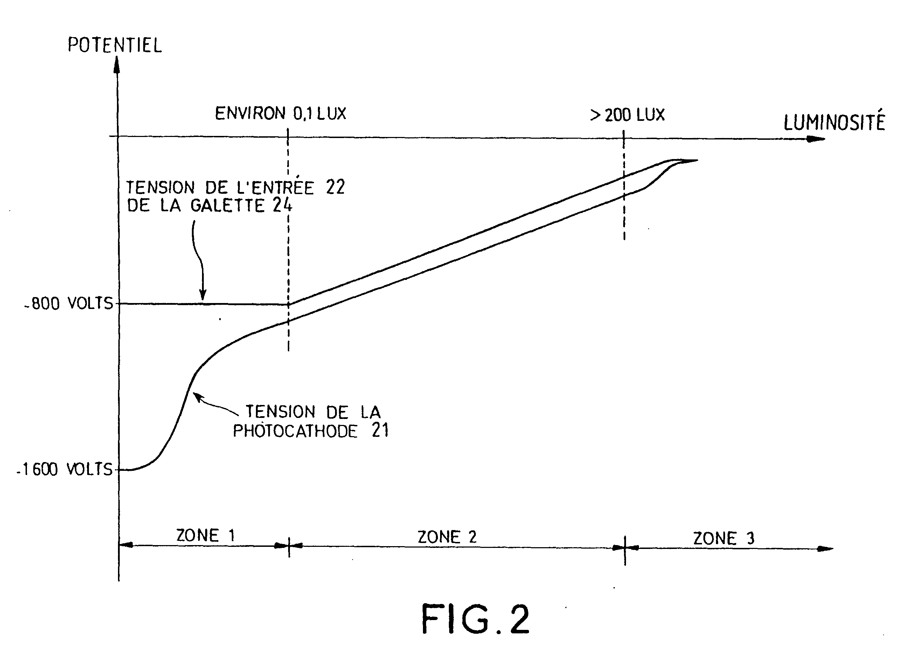

On souhaite faire en sorte que les potentiels de la photocathode 21 et de l'entrée 22 de la galette varient comme indiqué en figure 2 en fonction de la luminosité ambiante entrant dans le tube intensificateur d'image. Le potentiel sur l'entrée 22 de la galette est représentée par un trait continu et le potentiel de la photocathode 21 est représentée par un trait en pointillés.

Le fonctionnement désiré se divise en trois zones principales correspondant respectivement à une luminosité de scène très faible, une luminosité moyenne et une luminosité excessive.

Dans la zone 1, en conditions de luminosité ambiante très faible (inférieure ou très inférieure à 0,1 lux par exemple), on applique des tensions de valeurs absolues très importantes à la photocathode et à la galette pour obtenir une forte intensification de lumière par le gain du tube entre l'entrée et la sortie du tube. Puis, au fur et à mesure que la luminosité de scène augmente, on réduit l'écart entre tension de photocathode et tension d'entrée de galette, sans changer la tension de galette. Dans cette zone, le potentiel de l'entrée de galette est fixe et d'environ -800 à -1000 volts, correspondant au maximum de tension qu'on peut appliquer entre l'entrée et la sortie de galette (potentiel éventuellement réglable par un potentiomètre).

Le potentiel de photocathode peut être de l'ordre de -1600 volts environ pour les plus faibles luminosités et il se réduit ensuite rapidement dès que la luminosité augmente pour se rapprocher du potentiel d'entrée de galette, ce qui réduit le gain total du tube.

Dans cette fin de zone 1, le gain du tube reste sensiblement constant, car la tension de galette et la tension de photocathode sont sensiblement constantes. La luminosité de l'écran de sortie croît avec la luminosité d'entrée.

Dans la zone 2, au dessus d'une certaine valeur de luminosité moyenne de scène observée, de 0,1 lux par exemple, et jusqu'à une valeur de luminosité ambiante maximale de 200 lux par exemple, le gain du tube est asservi, par action sur la tension de galette, d'une manière telle qu'on conserve une luminosité moyenne sensiblement constante sur l'écran de sortie. Etant donné que le gain de luminance du tube intensificateur est sensiblement proportionnel à la tension de galette (à tension sensiblement constante entre photocathode et entrée de galette), la tension de galette va décroître à peu près linéairement avec l'augmentation de la luminosité de la scène observée pour obtenir en sortie une luminosité à peu près constante.

La luminosité moyenne de sortie autour de laquelle va s'asservir le système est de préférence réglable par un potentiomètre, l'utilisateur pouvant choisir la luminosité qui lui convient. Le réglage de ce potentiomètre déplace le seuil au-dessus duquel l'asservissement de tension de galette sera mis en oeuvre.

Dans cette zone 2 de la figure 2, au fur et à mesure que la luminosité ambiante croît, on fait décroître la tension de galette pour réduire le gain et on fait varier parallèlement la tension de photocathode pour que la différence de potentiel entre photocathode et entrée de la galette reste à une valeur limitée à peu près constante (32 volts dans l'exemple décrit).

Enfin, dans la zone 3, pour une luminosité ambiante, supérieure à un seuil de 200 lux par exemple, qui pourrait amener un endommagement de la photocathode ou de la galette de microcanaux, le tube est protégé par une réduction drastique de l'émission d'électrons par la photocathode. Cette forte réduction est obtenue en annulant pratiquement la différence de potentiel entre photocathode et entrée de la galette.

Généralement un système de vision nocturne est utilisé lorsque la luminosité ambiante est inférieure à quelques lux, une valeur de 200 lux pouvant correspondre à la présence de phares d'un véhicule dans le champ de vision du système.

Pour obtenir l'ensemble des zones de variation de gain expliquées en référence à la figure 2, les blocs d'alimentation sont constitués de la manière suivante :

Le bloc 6 est destiné à fournir la tension d'alimentation de la photocathode. Le transformateur 5 fournit à cet effet une tension alternative aux bornes d'un de ses enroulements secondaires, référencé 56. Cette tension est appliquée en entrée du bloc d'alimentation 6, elle y est redressée et multipliée par un multiplicateur de tension 6X12 formé par exemple d'une pompe à diodes de douze étages. Cette tension est référencée par rapport au potentiel d'entrée de galette, lui-même défini par le bloc d'alimentation 8, c'est-à-dire qu'une borne de l'enroulement 56 est connectée à l'entrée de galette 22, l'autre borne de l'enroulement servant à établir une tension pour la photocathode.

Le bloc d'alimentation 6 est conçu de manière à fournir un potentiel de photocathode inférieur d'environ 800 volts au potentiel d'entrée de galette lorsque l'éclairement ambiant est très faible et à réduire très fortement la différence entre le potentiel de photocathode et le potentiel d'entrée de galette lorsque l'éclairement augmente.

Cette particularité est obtenue en utilisant une résistance série R6, parcourue par le courant de photocathode, pour faire chuter le potentiel de la photocathode lorsque le courant de photocathode croît (ce qui se produit lorsque l'éclairement augmente). La résistance R6 a une forte valeur (environ 15 GΩ) choisie en fonction du courant maximum souhaité dans la photocathode lorsque le tube fonctionne à très grand gain dans la zone 1 de la figure 2.

Les électrons émis par la photocathode 21 connectée au bloc d'alimentation 6 conduisent à la circulation d'un courant i de photocathode. Lorsque le courant i de photocathode est nul, la tension de sortie du bloc 6 est par exemple de -800 volts (définie par l'enroulement 56 et le multiplicateur 6X12), et lorsque la luminosité ambiante augmente, le courant i augmente, ce qui diminue la valeur absolue de la différence de potentiel fournie par le bloc 6,

Cette diminution est cependant limitée grâce à un autre enroulement 57 dans le bloc 6, cet enroulement fournissant un courant qui ne traverse pas la résistance R6. L'enroulement 57 est associé à un ensemble de redressement D2,C2, et il permet de définir une tension fixe (32 volts) d'écart entre photocathode et entrée de galette en fin de zone 1 et dans la zone 2 de la figure 2. Lorsque la tension fournie par l'enroulement 56 chute du fait de l'augmentation de courant dans la résistance R6, l'ensemble 57, D2, C2, relié à la photocathode par une diode D1 prend en effet le relais pour fournir une tension fixe entre photocathode et entrée de galette.

Cette valeur fixe limite l'émission d'électrons par la photocathode afin de ne pas endommager la galette tout en donnant assez d'énergie aux électrons pour pénétrer la galette, faute de quoi le tube ne fournirait plus d'image de sortie. Cette valeur d'écart de tension dépend du tube et se trouve entre 30 et 45 volts pour les tubes généralement utilisés dans les systèmes d'aide à la vision nocturne. Dans l'exemple décrit on a choisi 32 volts.

Enfin un limiteur de courant 61 protège la photocathode 21 pour les courants trop forts. Il intervient pour le fonctionnement en zone 3 et permet de réduire à une valeur d'environ 2 volts l'écart entre tension de photocathode et tension de galette lorsque le courant de photocathode circulant dans le limiteur 61 dépasse une valeur correspondant à une luminosité ambiante de 200 lux par exemple.

Le bloc d'alimentation 9 est destiné à fournir la tension d'alimentation de l'écran de sortie 25. Cette tension est en principe fixe et par exemple égale à 5,7 kV. Elle est référencée par rapport à la sortie 23 de la galette (potentiel de référence). Le transformateur 5 fournit une tension alternative aux bornes de l'enroulement secondaire 59; cette tension alternative est redressée et multipliée dans le bloc 9 par un multiplicateur de tension 9X12 formé par exemple d'une pompe à diodes de douze étages. Le multiplicateur de tension est en série avec une résistance de limitation de courant R9 de forte valeur, par exemple environ 22 MΩ.

Le bloc 8 fournit la tension de galette. Etant donné que dans la zone 2 cette tension est asservie à la luminosité moyenne de l'écran de sortie, ce bloc 8 est contrôlé par un circuit d'asservissement 14 qui reçoit comme information d'entrée une mesure de courant d'écran provenant du bloc d'alimentation 9. La mesure de courant d'écran dans le bloc 9 est effectuée par exemple par une petite résistance Re raccordée à la masse et connectée en série dans la maille électrique comprenant la masse, l'enroulement 59 et l'écran de sortie 25.

Le bloc d'alimentation 8 comporte un amplificateur haute tension 13 capable de délivrer une tension variable (sous contrôle du circuit d'asservissement 14) entre d'une part l'entrée 22 de la galette et d'autre part la sortie 23 reliée à la masse 12 ou à un potentiel de référence voisin de cette masse. Le transformateur 5 fournit une tension alternative aux bornes de son enroulement secondaire 58, tension qui est appliquée en entrée du bloc 8. Dans le bloc 8, la tension en entrée est redressée et multipliée par le multiplicateur de tension 8X12, formé par exemple d'une pompe à diodes de douze étages, et elle alimente, sur une borne d'alimentation négative 81, un amplificateur haute tension 13 délivrant sur l'entrée de galette 22 une tension variable négative pouvant varier par exemple entre 10 et 1000 volts.

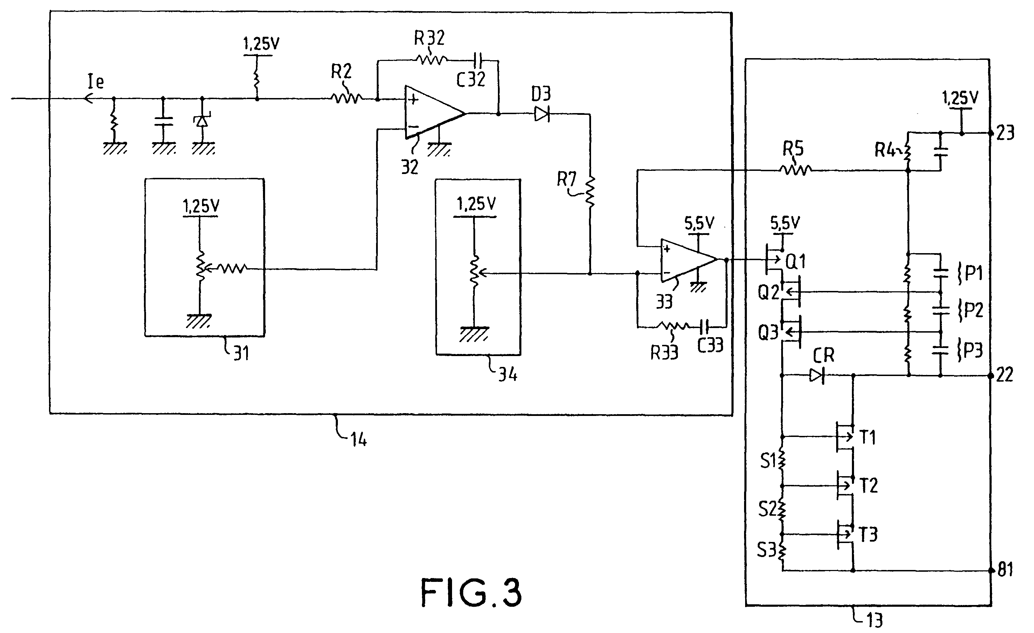

L'amplificateur haute tension 13 et son circuit d'asservissement 14 associé sont représentés en figure 3.

L'amplificateur 13 est alimenté entre une tension de référence fixe et une haute tension négative fixe. La tension de référence fixe est celle de la sortie de galette. Elle peut être reliée à la masse, ou, de préférence ici à une fausse masse de +1,25 volt par exemple; cette fausse masse facilite l'utilisation dans le circuit d'asservissement 14 d'amplificateurs basse tension alimentés entre 0 et 5 volts plutôt que des amplificateurs alimentés en symétrique entre +5 volts et -5 volts. La haute tension négative fixe est appliquée sur la borne d'alimentation 81 de l'amplificateur 13; sa valeur est par exemple de -1050 volts.

La sortie de l'amplificateur 13 est reliée à l'entrée 22 de galette.

On reviendra plus loin sur la constitution détaillée de l'amplificateur 13.

Le circuit d'asservissement 14 comprend essentiellement deux amplificateurs opérationnels basse tension et deux potentiomètres de réglage. Un schéma du circuit d'asservisement 14 est répresenté dans la figure 3.

La valeur maximum U de la tension de galette appliquée dans la zone de fonctionnement 1 de la figure 2 dépend des caractéristiques du tube. L'alimentation est adaptable au tube par le réglage de cette valeur maximum à l'aide d'un potentiomètre 34 relié à l'entrée inverseuse d'un amplificateur opérationnel basse tension 33. L'amplificateur opérationnel tend, comme on le verra, à asservir la tension de galette sur une valeur déterminée par la tension de consigne présente sur cette entrée inverseuse. Le réseau, comprenant une résistance R33 et une capacité C33, participe à la stabilité de la boucle formée par l'amplificateur opérationnel 33 et l'amplificateur haute tension 13.

Le seuil autour duquel on désire asservir la luminosité moyenne de l'écran de sortie est réglable par un potentiomètre 31. Ce potentiomètre est relié à l'entrée non-inverseuse d'un autre amplificateur opérationnel basse tension 32 qui reçoit par ailleurs sur son entrée inverseuse, à travers une résistance R2, la mesure de courant d'écran provenant du bloc 9. Le rôle de l'amplificateur 32 est de comparer la mesure de courant d'écran au seuil défini par le potentiomètre. Le réseau, comprenant une résistance R32 et une capacité C32, participe à la stabilité de la boucle d'asservissement de gain.

La sortie de l'amplificateur 32 est reliée par une diode D3 et une résistance R7 à l'entrée inverseuse de l'amplificateur 33. La diode établit une fonction de seuil de la manière suivante : lorsque le courant d'écran lₑ est faible et inférieur au seuil S correspondant à l'éclairement constant, l'amplificateur 32 est en saturation à la masse et la diode D3 reste bloquée. L'amplificateur 32 n'influe pas sur l'état de l'amplificateur 33 placé en aval. Lorsque le courant d'écran dépasse le seuil S, l'amplificateur 32 se dénature et agit sur l'amplificateur 33 en modifiant le niveau de consigne sur l'entrée inverseuse de ce dernier. Cette modification de niveau de consigne modifie en conséquence la tension appliquée à la galette.

La consigne sur laquelle l'amplificateur 33 asservit la tension de galette est alors la somme d'une valeur fixe, définie par le potentiomètre 34, et d'une valeur qui est nulle en dessous du seuil d'éclairement et qui est variable avec le courant d'écran au delà de ce seuil; cette valeur variable est définie par la sortie de l'amplificateur 32.

L'addition de ces deux valeurs est effectuée sur l'entrée inverseuse de l'amplificateur 33, qui est connectée à la fois au potentiomètre 34 et à l'amplificateur 32 à travers la résistance R7 et la diode D3.

L'amplificateur 33 asservit la tension de galette de la manière suivante : une fraction de la tension de galette est appliquée à l'entrée non-inverseuse de l'amplificateur 33 par l'intermédiaire d'une résistance R5. Cette fraction est obtenue par l'intermédiaire d'un pont diviseur résistif établi entre les sorties 22 et 23, ce pont diviseur servant par ailleurs à la polarisation des transistors haute tension de l'amplificateur 13.

L'amplificateur 33 compare cette fraction à la tension de consigne et contrôle l'amplificateur haute tension 13 pour lui faire modifier la tension de galette jusqu'à ce que la fraction de tension de galette sur son entrée non-inverseuse soit sensiblement égale à la tension de consigne sur l'entrée inverseuse.

La constitution de l'amplificateur 13 est la suivante : il comporte deux ensembles ayant chacun plusieurs transistors en série, ces transistors ayant des tenues en tension élevées compte tenu des tensions de l'ordre de 1000 volts qui doivent être commandées. L'utilisation de plusieurs transistors en série permet de répartir la tension sur les différents transistors. Le premier ensemble, ici trois transistors en série Q1, Q2, Q3, permet de commander la fourniture de courant à la galette pour décharger la capacité de galette et donc diminuer la tension de galette. Le deuxième ensemble, ici trois transistors en série T1, T2, T3, permet de prélever du courant sur la galette et donc de charger celle-ci en augmentant la tension de galette qui lui est appliquée.

Le premier ensemble est connecté entre l'entrée de galette 22 (sortie de l'amplificateur 13) et une référence de tension fixe qui peut être la masse ou la fausse-masse à 1,25 volts, ou encore de préférence ici une alimentation à +5,5 volts servant à alimenter les amplificateurs opérationnels 32 et 33. De préférence une diode CR est connectée entre le premier ensemble et la sortie 22 pour délivrer à la galette le courant fourni par le premier ensemble Q1, Q2, Q3 lorsque l'on veut diminuer brutalement la tension de galette et pour limiter la tension inverse sur la grille du transistor T1 bloqué pendant ce régime transitoire.

Le premier transistor Q1 du premier ensemble, relié à l'alimentation positive de 5 volts, est commandé par la sortie de l'amplificateur 33; il tend à conduire un courant plus important lorsque la tension de sortie de l'amplificateur 33 diminue et tend à conduire un courant moins important lorsque cette tension de sortie augmente (les transistors sont de préférence des transistors MOS à canal P). Les autres transistors Q2, Q3 du premier ensemble sont polarisés par le diviseur résistif P1, P2, P3 connecté entre les bornes 22 et 23 de la galette. La polarisation est faite de manière que les transistors se répartissent la tension globale (environ 1000 volts) que doit supporter l'amplificateur 13. La conduction des transistors Q2 et Q3 suit, grâce au pont diviseur, la commande d'augmentation ou diminution de conduction du transistor Q1. Des capacités peuvent être placées aux bornes du pont diviseur pour améliorer le temps de réponse des transistors Q2 et Q3.

Le deuxième ensemble de transistors T1, T2, T3, est connecté entre l'entrée de galette 22 (sortie de l'amplificateur 13) et la borne 81 d'alimentation négative haute tension. Ils sont polarisés par un autre pont diviseur résistif S1, S2, S3 permettant de répartir la tenue en tension sur les différents transistors. Les transistors du deuxième ensemble sont de préférence également des transistors MOS à canal P. Leur augmentation ou diminution de conduction est pilotée par le pont diviseur S1, S2, S3, et va dans le sens inverse de celle du transistor Q1 du premier ensemble.

L'amplificateur ainsi constitué est un amplificateur à faible courant de repos (c'est-à-dire un faible courant consommé en régime de tension de galette fixe). Il réagit rapidement à un signal d'augmentation de conduction des transistors du premier ensemble en cas de nécessité de baisse de gain de galette (cas d'éblouissement notamment). En effet, une diminution de la tension de grille de Q1 sous la commande de l'amplificateur 33 fait non seulement conduire plus le transistor, mais fait aussi augmenter la tension de drain des transistors Q2 et Q3 sans changer au départ leur tension de grille ou en l'accroissant grâce aux capacités du pont diviseur, de sorte que ces transistors se mettent eux aussi à conduire plus de courant.

L'amplificateur 13 réagit également rapidement en cas de nécessité d'augmenter le gain de luminosité (postérieurement à un éblouissement par exemple). En effet, une augmentation de la tension de grille de Q1 fait diminuer sa conduction, baissant immédiatement le potentiel du pont diviseur S1, S2, S3 donc le potentiel des grilles de T1, T2, T3, ce qui augmente la conduction de ces derniers, permettant de prélever du courant de la borne d'entrée de galette 22. La galette, capacitive se charge alors rapidement, la tension de galette est augmentée et le potentiel de l'entrée 22 de la galette est amené à une valeur plus négative.

A titre d'exemple trois transistors MOS en série ayant chacun une tension de claquage de 500 volts permettent de constituer un ensemble en série résistant aux tensions utilisées dans le bloc d'alimentation 8.

L'amplificateur 13 utilisé dans le tube selon l'invention est donc un amplificateur présentant une faible consommation, avec des vitesses de montée et de descente élevées permettant de réaliser une régulation automatique du gain du tube très rapide, évitant l'éblouissement de l'opérateur et évitant un trou noir après éblouissement.

On pourrait réaliser un montage à symétrie complémentaire en combinant des transistors canal N et P afin d'obtenir une rapidité encore plus élevée, mais la commande en est plus délicate.

Un montage de même type que celui décrit peut être réalisé avec des transistors bipolaires PNP, mais ces transistors étant commandés en courant, les courants consommés par les bases des transistors nécessitent de diminuer l'impédance des ponts diviseurs de polarisation ce qui a pour conséquence d'augmenter fortement la consommation.

On notera que la tension 81 d'alimentation de l'amplificateur 13 n'a pas besoin d'être régulée de façon précise, elle est obtenue simplement à l'aide d'un enroulement 58 à partir du même transformateur que pour l'alimentation de l'écran. Cela évite les risques de battement que pourraient provoquer la présence de plusieurs convertisseurs haute tension asynchrones.

Parmi les avantages de l'invention, on remarquera par ailleurs que la galette se trouve à un potentiel proche de la masse, ce qui permet une régulation directe sans passer par un circuit d'isolement très haute tension. Le contrôle de gain possède une grande sensibilité.

## Revendications

1. Dispositif à tube intensificateur d'image comprenant une photocathode (21), une galette d'amplification à microcanaux (24), un écran de sortie (25) et un circuit d'alimentation (10) produisant une première tension de référence appliquée à une première borne (23) de la galette, une deuxième tension variable appliquée à une deuxième borne (22) de la galette, une troisième tension variable appliquée à la photocathode, et une quatrième tension appliquée à l'écran de sortie, le circuit d'alimentation (10) comprenant un moyen (Re) de mesure du courant consommé par l'écran de sortie et un circuit de commande (13,14) de la deuxième tension variable appliquée à la galette, ce circuit de commande produisant une tension fixe tant que le courant de l'écran ne dépasse pas un seuil et, au delà de ce seuil, une tension variable asservie aux évolutions du courant de l'écran de sortie dans un sens tendant à maintenir ce courant sensiblement constant, le circuit d'alimentation comprenant en outre des moyens (6) pour maintenir sensiblement constante, au delà dudit seuil, la différence entre la troisième tension variable appliquée à la photocathode et la deuxième tension variable appliquée à la galette, le circuit de commande (13, 14) comprenant un amplificateur haute tension (13) à transistors (T1, T2, T3, Q1, Q2, Q3), le tube étant **caractérisé en ce que** l'amplificateur (13) comporte deux ensembles (T1, T2, T3, Q1, Q2, Q3) de transistors en série, les ensembles étant reliés chacun d'une part à la galette (24) et d'autre part à une source d'alimentation respective, et **en ce que** le tube comporte un circuit d'asservissement (14) commandant la conduction d'au moins un des transistors d'un des deux ensembles.

2. Dispositif à tube intensificateur selon la revendication 1, **caractérisé en ce que** les transistors des deux ensembles sont polarisés de manière à être faiblement conducteurs en l'absence de variation de la tension variable appliquée à la galette, et sont polarisés de manière que les transistors de l'un des ensembles (Q1, Q2, Q3) fournissent du courant à la galette sous la commande du circuit d'asservissement (14) pour faire varier la tension de galette dans un sens et que les transistors (T1, T2, T3) de l'autre ensemble prélèvent du courant de la galette sous la commande du circuit d'asservissement pour faire varier la tension de galette dans l'autre sens.

3. Dispositif à tube intensificateur selon la revendication 2, **caractérisé en ce que** les transistors des deux ensembles sont des transistors MOS à canal P.

4. Dispositif à tube amplificateur selon la revendication 3, **caractérisé en ce que** l'un des transistors du premier ensemble a sa grille commandée par le circuit d'asservissement, les autres transistors du premier ensemble ont leurs grilles commandées par un pont diviseur, et les transistors du deuxième ensemble ont leurs grilles commandées par un autre pont diviseur.

5. Dispositif à tube intensificateur selon l'une des revendications précédentes, **caractérisé en ce qu'**il comporte un premier amplificateur opérationnel pour comparer le courant d'écran de sortie à un seuil, un deuxième amplificateur opérationnel pour comparer une fraction de la tension de galette à une valeur de consigne, et un moyen pour établir comme valeur de consigne la somme d'une valeur fixe et d'une valeur variable, la valeur variable étant fournie par le premier amplificateur opérationnel lorsque le courant d'écran dépasse ledit seuil.

## Patentansprüche

1. Vorrichtung mit einer Bildverstärkerröhre, die eine Photokathode (21), eine Mikrokanalplatte (24) zur Verstärkung, einen Ausgangsbildschirm (25) und eine Stromversorgungsschaltung (10) enthält, welche eine erste Spannung, die als Bezugsspannung an eine erste Klemme (23) der Mikrokanalplatte angelegt ist, eine zweite Spannung, die variabel ist und an eine zweite Klemme (22) der Mikrokanalplatte angelegt ist, eine dritte Spannung, die variabel ist und an die Photokathode angelegt ist, und eine vierte Spannung liefert, die an den Ausgangs-Bildschirm angelegt ist, wobei die Stromversorgungsschaltung (10) ein Mittel (Re) zur Messung des vom Ausgangsbildschirm verbrauchten Stroms und eine Steuerschaltung (13, 14) für die an die Mikrokanalplatte angelegte zweite, variable Spannung aufweist, die eine feste Spannung liefert, so lange der Bildschirmstrom eine Schwelle nicht überschreitet, während sie jenseits dieser Schwelle eine variable Spannung liefert, die gemäß der Entwicklung des Stroms im Ausgangsbildschirm in einer solchen Richtung nachgeregelt wird, daß auf dies Weise dieser Strom im wesentlichen konstant gehalten wird, wobei die Stromversorgungsschaltung (10) weiter Mittel (6) aufweist, um jenseits dieser Schwelle die Differenz zwischen der dritten, variablen Spannung, die an die Photokathode angelegt ist, und der zweiten, variablen Spannung, die an die Mikrokanalplatte angelegt ist, im wesentlichen konstant zu halten, wobei die Steuerschaltung (13, 14) einen Hochspannungsverstärker (13) mit Transistoren (T1, T2, T3, Q1, Q2, Q3) enthält und wobei die Bildverstärkerröhre **dadurch gekennzeichnet ist, daß** der Verstärker (13) zwei Gruppen (T1, T2, T3; Q1, Q2, Q3) von Transistoren in Reihenschaltung enthält und daß beide Gruppen einerseits an die Mikrokanalplatte (24) und andrerseits an je eine Stromquelle angeschlossen sind und daß die Röhre eine Regelschaltung (14) enthält, die mindestens einen Transistor aus einer der beiden Gruppen leitend steuert.

2. Vorrichtung mit Bildverstärkerröhre nach Anspruch 1, **dadurch gekennzeichnet, daß** die Transistoren der beiden Gruppen so vorgespannt sind, daß sie in Abwesenheit einer Veränderung der an die Mikrokanalplatte angelegten variablen Spannung leicht leitend sind und daß die Transistoren der einen Gruppe (Q1, Q2, Q3) so vorgespannt sind, daß sie unter Steuerung durch die Regelschaltung (14) Strom an die Mikrokanalplatte liefern, um die Spannung an der Mikrokanalplatte in einer Richtung zu verändern, während die Transistoren (T1, T2, T3) der anderen Gruppe Strom aus der Mikrokanalplatte gemäß der Steuerung durch die Regelschaltung ziehen, um die Spannung der Mikrokanalplatte in der anderen Richtung zu verändern.

3. Vorrichtung mit Bildverstärkerröhre nach Anspruch 2, **dadurch gekennzeichnet, daß** die Transistoren der beiden Gruppen MOS-Transistoren mit Kanal P sind.

4. Vorrichtung mit Bildverstärkerröhre nach Anspruch 3, **dadurch gekennzeichnet, daß** einer der Transistoren der ersten Gruppe über sein Gate von der Regelschaltung gesteuert wird, daß die anderen Transistoren dieser ersten Gruppe über ihre Gates von einer Spannungsteilerbrücke gesteuert werden und daß die Transistoren der zweiten Gruppe über ihre Gates von einer weiteren Spannungsteilerbrücke gesteuert werden.

5. Vorrichtung mit Bildverstärkerröhre nach einem der vorstehenden Ansprüche, **dadurch gekennzeichnet, daß** sie einen ersten Operationsverstärker zum Vergleich des Stroms des Ausgangsbildschirms mit einer Schwelle, einen zweiten Operationsverstärker zum Vergleich eines Teils der Spannung der Mikrokanalplatte mit einem Sollwert und ein Mittel aufweist, um als Sollwert die Summe aus einem festen Wert und einem variablen Wert zu bilden, wobei der variable Wert vom ersten Operationsverstärker geliefert wird, wenn der Bildschirmstrom die Schwelle überschreitet.

## Claims

1. Image-intensifier tube device comprising a photocathode (21), a microchannel amplification wafer (24), an output screen (25) and a supply circuit (10) producing a first reference voltage which is applied to a first terminal (23) of the wafer, a second variable voltage which is applied to a second terminal (22) of the wafer, a third variable voltage which is applied to the photocathode and a fourth voltage which is applied to the output screen, the supply circuit (10) comprising a means (Re) for measuring the current consumed by the output screen and a circuit (13, 14) for controlling the second variable voltage which is applied to the wafer, this control circuit producing a fixed voltage so long as the current of the screen does not exceed a threshold and, beyond this threshold, a variable voltage slaved to the changes in the current of the output screen in one sense tending to keep this current substantially constant, the supply circuit furthermore comprising means (6) for keeping substantially constant, beyond the said threshold, the difference between the third variable voltage applied to the photocathode and the second variable voltage applied to the wafer, the control circuit (13, 14) comprising a high-voltage amplifier (13) with transistors (T1, T2, T3, Q1, Q2, Q3), the tube being **characterized in that** the amplifier (13) includes two sets (T1, T2, T3, Q2, Q3 of transistors in series, the sets each being connected on the one hand to the wafer (2) and on the other to a respective supply source, and **in that** the tube comprises a slaving circuit (14) controlling the conduction of at least one of the transistors of one of the two sets.

2. Intensifier-tube device according to Claim 1, **characterized in that** the transistors of the two sets are biased so as to have low conduction in the absence of variation in the variable voltage applied to the wafer, and are biased so that the transistors of one of the sets (Q1, Q2, Q3) deliver current to the wafer at the instigation of the slaving circuit (14) in order to vary the wafer voltage in one sense and that the transistors (T1, T2, T3) of the other set draw current from the wafer at the instigation of the slaving circuit in order to vary the wafer voltage in the other sense.

3. Intensifier-tube device according to Claim 2, **characterized in that** the transistors of the two sets are P-channel MOS transistors.

4. Amplifier-tube device according to Claim 3, **characterized in that** one of the transistors of the first set has its gate controlled by the slaving circuit, the other transistors of the first set have their gates controlled by one divider bridge, and the transistors of the second set have their gates controlled by another divider bridge.

5. Intensifier-tube device according to one of the preceding claims, **characterized in that** it includes a first operational amplifier for comparing the output screen current with a threshold, a second operational amplifier for comparing a fraction of the wafer voltage with a setpoint value, and a means for establishing as the setpoint value the sum of a fixed value and a variable value, the variable value being delivered by the first operational amplifier when the screen current exceeds the said threshold.
